# FASCICULE DE BREVET EUROPEEN

(11) **EP 2 090 136 B1**
(45) Date de publication et mention de la délivrance du brevet: **11.07.2012**
(21) Numéro de dépôt: 07866493.5
(22) Date de dépôt: 25.10.2007
(51) Int. Cl.: H04W 64/00, G01S 5/02, G01S 19/06, G01S 19/09

(54) **PROCEDE DE LOCALISATION GEOGRAPHIQUE D'UN TERMINAL CONNECTE A UN RESEAU DE TELECOMMUNICATIONS**
VERFAHREN ZUR GEOGRAFISCHEN ORTUNG EINES AN EIN TELEKOMMUNIKATIONSNETZ ANGESCHLOSSENEN ENDGERÄTS
METHOD FOR THE GEOGRAPHIC LOCATION OF A TERMINAL CONNECTED TO A TELECOMMUNICATION NETWORK

(30) Priorité: 06.11.2006 FR 0654736
(43) Date de publication de la demande: 19.08.2009
(73) Titulaire: FRANCE TELECOM, 75015 Paris (FR)
(72) Inventeur: GRANGE, Julien, 75012 Paris (FR); BERLANDIER, Laurent, 75015 Paris (FR)
(74) Mandataire: Delumeau, François Guy
(86) Numéro de dépôt international: PCT/FR2007/052249
(87) Numéro de publication internationale: WO 2008/056070

(56) Documents cités:
- WO-A-2004/092762
- FR-A1- 2 820 597
- FR-A1- 2 866 187
- GB-A- 2 354 387
- US-A1- 2004 087 316
- US-A1- 2005 021 369

## Description

### Arrière-plan de l'invention

La présente invention se rapporte au domaine général des réseaux de télécommunications.

L'invention concerne plus particulièrement les technologies permettant la localisation géographique d'un terminal connecté à un réseau de télécommunications. Au sens de l'invention, le réseau auquel est connecté le terminal peut être indifféremment un réseau d'accès de type « mobile », comme par exemple un réseau GSM (Global System for Mobile communications) ou UMTS (Universal Mobile Telecommunication System), ou un réseau d'accès de type « fixe », comme par exemple un réseau RTC (Réseau Téléphonique Commuté), WLAN (Wireless Local Access Network), ou ADSL (Asymmetric Digital Subscriber Une).

Ce réseau d'accès permet notamment au terminal de communiquer avec un système de localisation afin de déterminer sa position géographique. Cette position géographique peut être exprimée par exemple en termes de coordonnées géographiques (longitude, latitude,...), d'adresse postale ou de zone géographique.

Dans l'état actuel de la technique, il existe des méthodes permettant une localisation rapide du terminal (en quelques secondes). Il s'agit par exemple de méthodes de localisation par triangulation ou d'identification de cellule (technologie « Cell-Id ») dans un réseau de télécommunications cellulaire. Dans ce dernier cas, la position géographique d'un terminal dans le réseau cellulaire est identifiée en recoupant l'identifiant de la cellule à laquelle il est attaché avec les caractéristiques géographiques de cette cellule. Elle est ainsi déterminée à la cellule près, *i.e*., on ne connaît pas la localisation précise du terminal dans la cellule. L'homme du métier comprend aisément que la précision d'une telle estimation est par conséquent faible, typiquement selon la taille de la cellule de 200m en milieu dense ou urbain à 20km en milieu rural.

Afin de permettre une localisation géographique plus précise du terminal, il existe des méthodes de localisation, comme par exemple, la technologie de GPS assisté ou « A-GPS » (Assisted Global Positioning System), s'appuyant sur les systèmes satellitaires. De telles méthodes utilisent en premier lieu une estimation grossière de la position du terminal (par exemple la position délivrée par une méthode de localisation à la cellule), puis affinent cette estimation par le biais d'échanges entre un serveur A-GPS et le terminal.

Au cours de ces échanges, le serveur A-GPS envoie au terminal des données d'assistance lui permettant d'identifier les signaux satellites qu'il doit suivre et mesurer. Le résultat de ces mesures est soit utilisé directement par le terminal, soit renvoyé au serveur A-GPS, pour déterminer une position géographique précise du terminal. Une précision d'environ 5 à 10m est ainsi obtenue.

Cependant, on comprend aisément que de telles méthodes ont une latence plus importante que les méthodes d'identification de cellule ou de localisation par triangulation. Un ordre de grandeur du temps nécessaire pour délivrer une position géographique précise à l'aide d'un système A-GPS est d'environ 45s.

Par ailleurs, si, pour quelle que raison que ce soit, le calcul de la position précise échoue, par exemple du fait de la non réception des signaux satellitaires par le terminal, cette latence est encore augmentée. Un message d'erreur est alors délivré au client demandeur de la localisation du terminal pour lui indiquer l'échec de la localisation. Ce message d'erreur n'est délivré qu'après plusieurs minutes, le temps que le terminal ou le système de localisation se rende compte de l'échec de la méthode de localisation.

Dans certains systèmes, ce message d'erreur est accompagné d'une localisation géographique peu précise calculée à l'aide d'une méthode de repli. Cependant, la méthode de repli n'est initiée qu'après constatation de l'échec de la méthode de localisation précise, c'est-à-dire après une attente de plusieurs dizaines de secondes voire plusieurs minutes.

Par conséquent, lors de telles situations, la latence ainsi occasionnée est relativement importante et peut donner l'impression à l'utilisateur demandeur d'une localisation précise d'un équipement que le système de localisation ne fonctionne pas.

*Le document US 2004*/*0087316 décrit un procédé et un dispositif pour localiser un dispositif sans fil tel qu'un téléphone cellulaire.*

*Le document WO 2004*/*092762 décrit un procédé et un système pour localiser en plusieurs étapes un émetteur sans fil.*

*Le document* FR 2 866187 *concerne un procédé de transmission à un centre d'appels de données de localisation d'un terminal de communication appelant.*

### Objet et résumé de l'invention

Selon un premier aspect, l'invention vise un procédé de localisation géographique d'un terminal connecté à un réseau de télécommunications, comportant :
- une étape de réception d'une requête visant à l'obtention par un destinataire d'une position géographique de précision fine d'un terminal ;
- une étape d'obtention d'une position géographique de précision grossière de ce terminal à partir d'informations sur le terminal ;
- une étape de détermination de la position géographique de précision fine du terminal à l'aide de la position géographique de précision grossière ;
- une étape de fourniture de cette position géographique de précision fine au destinataire en réponse à la requête ; et
- une étape préliminaire à l'étape de fourniture, d'envoi au destinataire d'un premier message, ce premier message comportant la position géographique de précision grossière.

*Conformément à* /*'invention, l'étape de détermination comporte :*
- *une étape d'obtention de données d'assistance à l'aide de la position géographique de précision grossière.*
- *une étape d'envoi des données d'assistance au terminal, pour l'obtention des mesures utiles à l'évaluation de la position géographique de précision fine; et*
- *une étape de réception d'un message du terminal comportant la position géographique de position fine.*

Le destinataire au sens de l'invention peut être de différentes natures : il peut s'agir par exemple d'une application, d'un agent, d'une base de données, d'une plateforme de service,...

Au sens de l'invention, les notions de position géographique de précision fine et de précision grossière sont des notions relatives. Une position géographique de précision fine d'un terminal désigne une position géographique obtenue avec une plus grande précision qu'une position géographique de précision grossière, par rapport à la position géographique réelle du terminal. Ainsi, il est connu de l'homme du métier que la technologie Cell-Id détermine une position géographique de précision grossière d'un terminal par rapport à la technologie A-GPS qui délivre une position géographique de précision fine de ce terminal. L'emploi des qualificatifs « fine » et « grossière » n'est en aucun cas limitatif et ne contient pas implicitement d'information sur la précision absolue de la position géographique ainsi déterminée.

Le procédé de localisation géographique d'un terminal selon l'invention permet ainsi au destinataire d'obtenir une localisation géographique du terminal en deux phases :
- une première phase au cours de laquelle il obtient une position géographique de précision grossière du terminal, suivie par :
- une seconde phase au cours de laquelle il obtient une position géographique de précision fine de ce terminal.

L'envoi de la position de précision grossière du terminal au destinataire est effectué pendant la recherche de la position de précision fine, de sorte que le destinataire dispose rapidement d'une première information sur la localisation du terminal.

Ainsi, une personne A cherchant à rejoindre une personne B équipée d'un terminal reçoit, grâce au procédé selon l'invention, une première localisation grossière de la personne B dans un laps de temps très réduit (au bout de quelques secondes), lui permettant rapidement de se diriger dans la direction de la personne B. Puis dans un second temps, au bout de quelques dizaines de secondes, cette position est affinée et la personne A peut alors rejoindre B, grâce à la position géographique de précision fine qu'elle a obtenue.

On comprend alors que si la procédure de détermination de la position de précision fine du terminal échoue et se solde par l'obtention d'un message d'erreur, une première position géographique grossière du terminal aura déjà été envoyée au destinataire sans attendre de constater l'échec de la procédure de détermination de la position de précision fine.

Le destinataire peut être ou non à l'origine de la requête du terminal. Ainsi, par exemple, la requête de localisation peut être émise par un équipement d'une personne en détresse et les positions géographiques de précisions grossière et fine envoyées à un dispositif destinataire d'un service d'urgences.

La position de précision grossière du terminal est obtenue à partir d'informations obtenues sur le terminal. Ces informations sont obtenues directement du terminal ou d'un autre équipement, par exemple un équipement du réseau auquel est connecté le terminal. Ces informations ne sont pas nécessairement interprétées par le terminal comme des données de localisation géographique à proprement parler, mais elles peuvent permettre, par exemple à un serveur de localisation, d'obtenir une localisation de ce terminal.

Ainsi par exemple, dans un mode particulier de réalisation de l'invention dans lequel le réseau de communication auquel est connecté le terminal est un réseau d'accès de type cellulaire, lesdites informations sur le terminal comportent un identifiant de la cellule à laquelle le terminal est attaché. Cet identifiant de cellule, combiné à des informations sur l'emplacement géographique et la géométrie de cette cellule, permet de déduire une position géographique de précision grossière du terminal, ainsi localisé à la taille de la cellule près.

Cet exemple est dépourvu de tout caractère limitatif. On peut citer d'autres informations sur le terminal permettant, au sens de l'invention, de déterminer une position géographique grossière du terminal, comme notamment :
- lorsque le terminal est connecté à un réseau local d'accès sans fil de type WLAN (Wireless Local Area Network), un identifiant du point d'accès auquel le terminal est attaché. Cet identifiant peut par exemple être le nom du point d'accès ou son adresse MAC (Medium Access Layer) ;
- une adresse IP (Internet Protocol) de connectivité du terminal au réseau Internet,...

Différents moyens peuvent être mis en oeuvre pour obtenir une position de précision grossière à l'aide de telles informations sur le terminal. Ces moyens comprennent notamment les méthodes suivantes :
- méthode d'identification de cellule, à partir d'un identifiant de cellule à laquelle le terminal est attaché ;
- méthode de localisation à partir d'une adresse IP provenant du terminal : cette méthode consiste d'une part à associer l'adresse IP envoyée par le terminal à un routeur dont cette adresse IP dépend, puis d'autre part à associer ce routeur à une zone géographique (par exemple une ville) couverte par ce routeur. La position géographique grossière du terminal est alors connue à la zone géographique près ainsi déterminée ;
- une méthode de localisation par triangulation...

Egalement, différentes méthodes peuvent être utilisées pour déterminer une position géographique de précision fine d'un terminal à l'aide d'une position géographique grossière de ce terminal. Citons de manière non exhaustive :
- les moyens employés dans les récepteurs GPS ou A-GPS pour déterminer la position géographique d'un équipement, comme par exemple une méthode de triangulation réalisée à l'aide des mesures de signaux effectuées par le terminal sur les signaux d'au moins quatre satellites pour déterminer la latitude, la longitude et l'altitude de l'équipement ;
- les techniques de type E-OTD/OTDOA (Enhanced Observed Time Différence / Observed Time Différence of Arrival), basées sur l'observation de la différence de temps d'arrivée des signaux au niveau d'un terminal ou d'un équipement d'accès au réseau (point d'accès, station de base,...) ;
- des méthodes de localisation à l'aide d'un identifiant ADSL, consistant à déterminer la localisation précise d'un terminal en identifiant la ligne ADSL à laquelle il est connecté,...

Corrélativement, l'invention vise un serveur de localisation géographique d'un terminal connecté à un réseau de télécommunications, comprenant :
- des moyens pour recevoir une requête visant à l'obtention par un destinataire d'une position géographique de précision fine d'un terminal ;
- des moyens pour obtenir une position géographique de précision grossière du terminal à partir d'informations sur ce terminal ;
- des moyens pour déterminer la position géographique de précision fine du terminal à l'aide de la position géographique de précision grossière ;
- des moyens pour fournir au destinataire la position géographique de précision fine en réponse à la requête ; et
- des moyens pour envoyer au destinataire, préliminairement à la fourniture de la position géographique de précision fine, un premier message, ce premier message comportant la position géographique grossière du terminal.

*Conformément à l'invention, les moyens pour déterminer la position géographiques de précision fine du terminal comprennent des moyens pour obtenir des données d'assistance à l'aide de la position géographique de précision grossière, des moyens pour envoyer ces données au terminal pour l'obtention de mesures utiles à l'évaluation de la position géographique de précision fine, et des moyens pour recevoir un message du terminal comportant la position géographique de précision fine.*

Selon une variante, le serveur comprend des moyens pour activer l'envoi de la position de précision grossière du terminal au destinataire pendant la détermination de la position géographique de précision fine du terminal.

Selon l'invention, la position géographique de précision fine du terminal est calculée par le terminal lui-même. Ceci est possible par exemple lorsque le terminal est équipé d'un dispositif de type GPS. Dans ce mode de réalisation particulier de l'invention, le terminal peut alors :
- soit envoyer la position géographique de précision fine qu'il a ainsi calculée dans un message vers le serveur de localisation selon l'invention. Le serveur fournit ensuite cette position au destinataire, par exemple via un message de notification en réponse à la requête ;
- soit fournir directement ladite position géographique au destinataire en réponse à la requête. Différents moyens pour fournir la position géographique de précision fine au destinataire peuvent être mis en oeuvre par le terminal. Cela peut se faire par exemple via une interface de programmation de type API (Application Programming Interface en anglais) lorsque le destinataire se trouve dans le terminal. En variante, lorsque le destinataire se trouve dans le terminal, l'entité du terminal ayant effectué le calcul de la position géographique de précision fine peut fournir au destinataire cette position en la mémorisant dans un registre auquel le destinataire peut ensuite accéder.

Dans un mode particulier de réalisation, au cours de l'étape de fourniture du procédé de localisation géographique d'un terminal selon l'invention, la position géographique de précision fine du terminal est fournie dans un second message envoyé au destinataire.

Ainsi le procédé et le serveur de localisation géographique selon l'invention comportent des moyens permettant d'obtenir des données d'assistance aidant à l'évaluation de la position géographique de précision fine du terminal. Ces données sont, par exemple dans le cas de la technologie A-GPS, des données obtenues en interrogeant un système satellite et qui comportent des caractéristiques d'éphémérides, d'horloges ou de fréquence,... associées aux signaux satellites utiles pour déterminer la position géographique de précision fine du terminal. Ces données permettent avantageusement une localisation plus rapide et plus efficace du terminal. En particulier, elles permettent de diminuer les situations d'échec rencontrées au cours de l'étape de détermination de la position de précision fine du terminal.

Ces données d'assistance sont alors envoyées par le serveur de localisation selon l'invention au terminal, puis utilisées par ce terminal :
- soit pour réaliser des mesures sur ces signaux satellites et calculer à l'aide des données de mesures ainsi obtenues la position géographique de précision fine ;
- soit pour réaliser des mesures sur ces signaux satellites et envoyer les données de mesures ainsi obtenues au serveur de localisation afin qu'il puisse évaluer la position géographique de précision fine.

Dans un mode particulier de réalisation de l'invention, au moins un message parmi le premier et le deuxième messages comporte une indication représentative de la précision de la position géographique comprise dans ce message.

Le destinataire de la localisation du terminal dispose ainsi d'une indication lui permettant d'évaluer la précision de la position géographique qu'il a reçue, typiquement si il s'agit d'une estimation grossière de la localisation du terminal ou au contraire précise.

L'indication de la précision de la position géographique comprise dans le message peut prendre différentes formes. Par exemple, il peut s'agir d'une indication en terme de distance : la position géographique délivrée est donnée à un nombre de mètres ou de kilomètres près ;

Dans un mode particulier de réalisation de l'invention, le premier message comporte une indication selon laquelle la position géographique de précision fine sera envoyée ultérieurement.

Par exemple, cette indication peut être comprise dans un champ du message qui prend une certaine valeur lorsqu'il s'agit d'une première réponse intermédiaire à la localisation du terminal (et donc comportant une position géographique du terminal de précision grossière), et une autre valeur lorsqu'il s'agit du deuxième message c'est-à-dire, du message de réponse à la requête comportant une position géographique du terminal de précision fine. La réception par le destinataire du premier message lui permet, en consultant de champ, d'identifier qu'il s'agit d'une réponse intermédiaire et par conséquent que la réponse à sa requête comportant une position géographique de précision fine lui parviendra ultérieurement.

Dans un mode particulier de réalisation de l'invention, le serveur de localisation selon l'invention est conforme au standard SUPL (Secure User Plane Location), à une extension du standard SUPL, à une évolution du protocole SUPL ou à un standard de type SUPL Pour plus de détails sur le standard SUPL, l'homme du métier pourra se référer aux documents de spécifications disponibles sur le site de l'Open Mobile Alliance (OMA) http://www.openmobilealliance.org/. Le standard SUPL permet avantageusement l'implémentation inter-opérable de technologies de localisation à base de données d'assistance, par exemple les données échangées dans le cadre d'un système A-GPS. Il est utilisé notamment dans de nombreuses implémentations de localisation sur réseau mobile, indépendamment de la technologie d'accès de ce réseau.

Dans ce mode particulier de réalisation de l'invention, le premier message et/ou le second message envoyés au destinataire sont conformes à un protocole parmi le protocole SUPL, une extension du protocole SUPL, une évolution du protocole SUPL et un protocole de type SUPL (Secure User Plane Location).

Ainsi, à titre d'exemple, le premier message peut constituer une extension du protocole SUPL (c'est-à-dire un message non défini dans la version actuelle du protocole SUPL), tandis que le second message est un message défini par le protocole SUPL

Dans un mode particulier de réalisation de l'invention, le premier message et/ou le second message envoyés au destinataire sont conformes à un protocole parmi le protocole MLP, une extension du protocole MLP, une évolution du protocole MLP ou un protocole de type MLP (Mobile Location Protocol).

Ainsi, à titre d'exemple, le premier message peut constituer une extension du protocole MLP (c'est-à-dire un message non défini dans la version actuelle du protocole MLP), tandis que le second message est un message défini par le protocole MLP.

Le protocole MLP permet avantageusement à un client d'interroger un serveur de localisation sur le mode requête-réponse. Comme le protocole SUPL, ce protocole est utilisé notamment dans de nombreuses implémentations de localisation sur réseau mobile cellulaire. Pour plus de détails sur le standard MLP, l'homme du métier pourra se référer aux documents de spécifications disponibles sur le site de l'Open Mobile Alliance (OMA) http://www.openmobilealliance.org/.

Dans un mode particulier de réalisation, les différentes étapes du procédé de localisation géographique d'un terminal selon l'invention sont déterminées par des instructions de programmes d'ordinateurs.

En conséquence, l'invention vise aussi un programme d'ordinateur sur un support d'informations, ce programme étant susceptible d'être mis en oeuvre dans un serveur de localisation ou plus généralement dans un ordinateur, ce programme comportant des instructions adaptées à la mise en oeuvre des étapes d'un procédé de localisation géographique d'un terminal tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins qui en illustrent un exemple de réalisation dépourvu de tout caractère limitatif.

Sur les figures :
- la figure 1A représente, dans son environnement, un serveur de localisation conforme à l'invention dans un premier mode particulier de réalisation ;
- la figure 1B représente, sous forme d'organigramme, les principales étapes d'un procédé de localisation géographique d'un terminal conforme à l'invention, lorsqu'il est mis en oeuvre dans un serveur de localisation selon l'invention tel que représenté sur la figure 1A, dans un premier mode particulier de réalisation ;
- la figure 2A représente, dans son environnement, un serveur de localisation conforme à l'invention dans un second mode particulier de réalisation ; et
- la figure 2B représente, sous forme d'organigramme, les principales étapes d'un procédé de localisation géographique d'un terminal conforme à l'invention, lorsqu'il est mis en oeuvre dans un serveur de localisation selon l'invention tel que représenté sur la figure 2A, dans un second mode particulier de réalisation.

### Description détaillée de plusieurs modes de réalisation

Dans la description qui suit, nous allons considérer deux modes de réalisation particuliers.de l'invention.

### Premier mode particulier de réalisation de l'invention

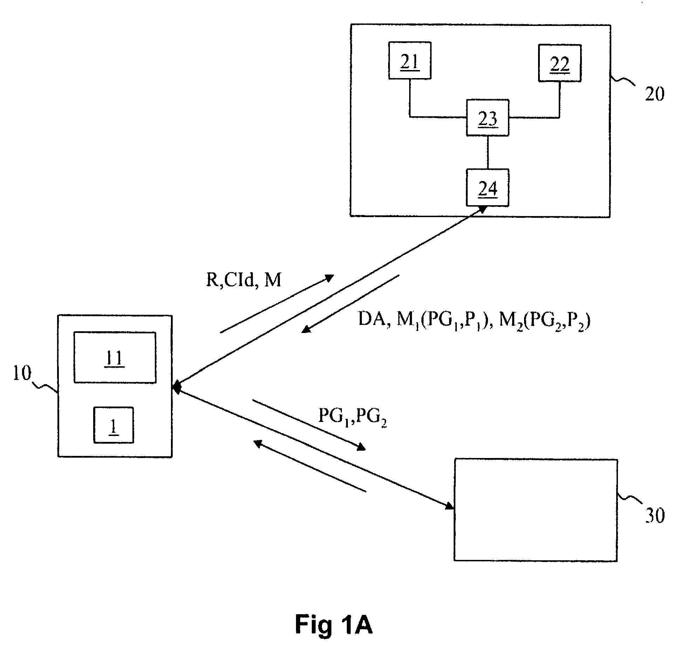

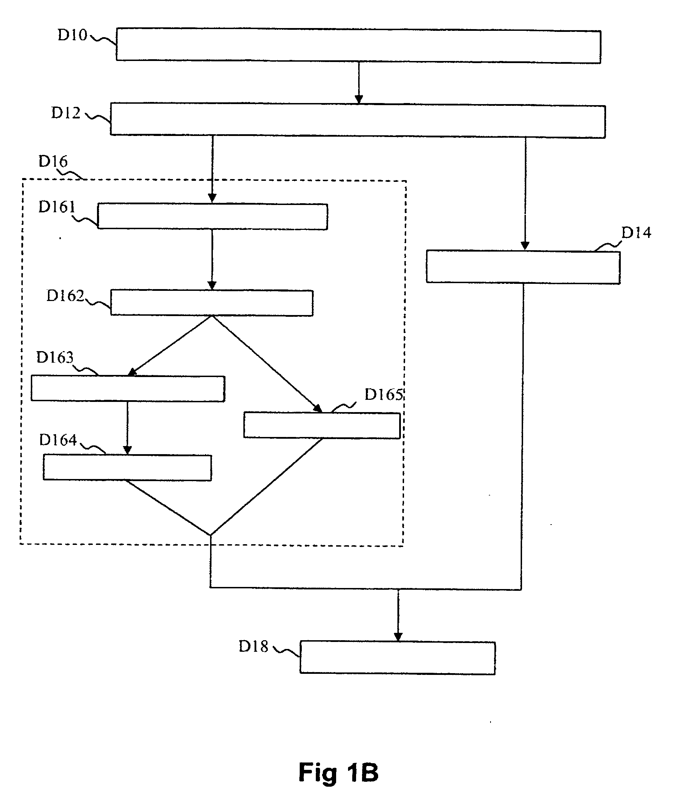

Le premier mode de réalisation particulier de l'invention est décrit en référence aux figures 1A et 1B.

La figure 1A représente un serveur 20 de localisation géographique d'un terminal 10 selon l'invention.

Dans l'exemple décrit ici, le terminal 10 est un terminal mobile, connecté à un réseau cellulaire de communications sans fil, par exemple de type GSM (Global System for Mobile communications) ou UMTS (Universal Mobile Télécommunication System) non représenté sur la figure, lui permettant de communiquer avec le serveur 20 de localisation selon l'invention.

Cette caractéristique n'est en aucun cas limitative. Le terminal 10 peut indifféremment être un terminal « fixe », connecté à un réseau d'accès fixe de type RTC (Réseau Téléphonique Commuté), WLAN (Wireless Local Access Network), ou ADSL (Asymmetric Digital Subscriber Line) par exemple.

Dans l'exemple décrit ici, nous supposons que le terminal 10 :
- possède d'une part une fonctionnalité « GPS Assisté » (A-GPS) ;
- et d'autre part est conforme au standard SUPL et adapté à émettre et à recevoir des messages du serveur de localisation 20 (par exemple le premier et le second messages comportant les positions géographiques de précision grossière et fine) qui seront considérés à l'avenir, ici, comme des extensions du protocole SUPL

Comme décrit précédemment, les spécifications du standard SUPL sont disponibles sur le site de l'Open Mobile Alliance http://www.openmobilealliance.org. Le standard SUPL définit à la fois une architecture distribuée et un protocole d'échange de données d'assistance et d'informations de localisation entre un terminal et un serveur.

Nous supposons également dans ce mode particulier de réalisation de l'invention que le serveur 20 de localisation selon l'invention est :
- d'une part, un serveur A-GPS ; et
- d'autre part, conforme au standard SUPL et adapté à recevoir et à émettre des messages vers le terminal 10 (par exemple le premier et le second messages comportant les positions géographiques de précision grossière et fine) qui, comme décrit ci-dessus, seront considérés à l'avenir ici comme des extensions du protocole SUPL

Dans un autre mode particulier de réalisation de l'invention, le premier message est une extension du protocole SUPL tandis que le second message est conforme au protocole SUPL

Ces deux variantes de réalisation (premier et second messages constituant des extensions du protocole SUPL ; premier message constituant une extension du protocole SUPL et second message conforme au protocole SUPL) ne sont en aucun cas limitatives, d'autres variantes pouvant être envisagées dans le cadre de l'invention.

Le terminal mobile 10 possède dans l'exemple décrit ici un écran 11, permettant à l'utilisateur du terminal de lancer des applications et de visualiser les résultats de ces applications.

Ainsi, on suppose qu'une application appelée « MM » est installée dans la mémoire du terminal 10. Cette application permet d'afficher une carte graphique sur l'écran 11 du terminal 10 de l'utilisateur, centrée sur la position géographique du terminal 10 et indiquant des points d'intérêt autour de cette position. On suppose que l'application « MM » fait en sorte de toujours fournir à l'utilisateur une localisation « précise » de la position géographique du terminal 10, *i.e.,* d'une précision de l'ordre de dix mètres dans l'exemple décrit ici.

Afin d'obtenir cette localisation précise de l'utilisateur, l'application interroge l'agent SUPL 1 du terminal 10. Cet agent envoie alors une requête R au serveur 20 de localisation afin d'obtenir une position de précision fine du terminal 10. Le destinataire de cette position de précision fine est dans cet exemple l'agent SUPL 1 du terminal 10 émetteur de la requête R.

Le terminal 10 est également en communication avec un serveur cartographique 30 via le réseau de télécommunications auquel il est connecté. Sur requête de l'application « MM », ce serveur cartographique 30 est adapté à envoyer des cartes au terminal 10 centrées sur la position de l'utilisateur spécifiée par l'application. Ces cartes peuvent ensuite être affichées par l'application sur l'écran 11 du terminal 10.

Le serveur 20 de localisation géographique a l'architecture matérielle d'un ordinateur.

Il comporte des moyens 24 de communication avec le terminal 10, via le réseau de télécommunications auquel le terminal 10 est connecté. Ces moyens 24 de communications lui permettent notamment d'envoyer :
- à l'agent SUPL 1 : un message comportant une position géographique PG du terminal 10 (position de précision grossière ou position de précision fine) et une indication quant à la précision de cette position ; et
- au terminal 10 : des données d'assistance DA utiles pour déterminer sa position géographique. Comme vu précédemment ces données d'assistance DA permettent avantageusement une localisation rapide et efficace du terminal.

Ces moyens 24 de communication lui permettent également de recevoir :
- une requête R de l'agent SUPL 1 du terminal 10 pour obtenir une position géographique de précision fine du terminal 10 ;
- des informations sur le terminal 10, comme par exemple ici l'identifiant CId de la cellule auquel le terminal 10 est attaché ;
- des résultats de mesures M effectuées par le terminal 10 en réponse aux données d'assistance envoyées par le serveur 20 de localisation au terminal 10 pour évaluer la position géographique de précision fine ; et
- la position géographique de précision fine du terminal si celle-ci est calculée au niveau du terminal 10.

Dans l'exemple décrit ici, le serveur 20 de localisation géographique comporte aussi des moyens, non représentés sur la figure 1A, pour obtenir d'un système satellite lesdites données d'assistance. Ces données comportent ici des données caractéristiques des signaux satellite pertinents pour déterminer la position géographique de ce terminal, comme par exemple des éphémérides, des données d'horloge,... associées à ces signaux satellite.

Dans un autre mode de réalisation de l'invention, d'autres types de données d'assistance peuvent être considérés. Citons par exemple pour un réseau cellulaire des données comportant des informations sur le positionnement des stations de base, sur les orientations des antennes de ces stations... Ces données sont par exemple mémorisées sur un serveur ou une base de données du réseau, qui peuvent être interrogés ensuite par le serveur 20 de localisation selon l'invention.

Comme décrit ultérieurement en référence à la figure 1B, le serveur 20 de localisation comporte également des moyens connus de l'homme du métier pour obtenir une position géographique de précision grossière PG₁ à partir d'informations sur le terminal 10, comme par exemple ici à partir de l'identifiant CId de la cellule à laquelle il est attaché. Il dispose aussi de moyens pour déterminer une position géographique fine PG₂ à partir des mesures M reçues du terminal 10 en réponse aux données d'assistance DA.

Le serveur 20 de localisation géographique comporte également un processeur 23, une mémoire vive 21 et une mémoire morte 22. La mémoire morte 22 du serveur 20 de localisation décrit ici comporte un programme informatique selon l'invention adapté à exécuter les principales étapes du procédé de localisation géographique selon l'invention, ces principales étapes étant représentées sous forme d'organigramme sur la figure 1B, décrite maintenant.

On suppose que l'utilisateur du terminal 10 lance l'application « MM » sur son terminal 10. L'application « MM » interroge l'agent SUPL 1 du terminal pour connaître la localisation du terminal 10. L'agent SUPL 1 initialise alors par l'intermédiaire d'une requête R une session SUPL avec le serveur 20 de localisation pour obtenir une position géographique de précision fine du terminal 10. Dans l'exemple décrit ici, la localisation du terminal 10 est attendue avec une précision de l'ordre de dix mètres.

Dans l'exemple décrit ici, le destinataire de la position géographique du terminal 10 au sens de l'invention est l'agent SUPL 1 du terminal 10. Il est à la fois, pour le procédé et le serveur de localisation selon l'invention, l'émetteur de la requête R de localisation et le destinataire de la position géographique de précision fine et de précision grossière du terminal 10.

Le serveur 20 de localisation géographique reçoit, au cours d'une étape D10, la requête R de l'agent SUPL 1 du terminal 10. Cette requête R contient un élément d'information provenant du terminal pouvant aider à sa localisation.

Dans l'exemple décrit ici, cette information provenant du terminal 10 est l'identifiant Cld de la cellule à laquelle le terminal 10 est attaché et est contenu dans la requête R.

Dans un autre mode de réalisation, il s'agit d'un identifiant de localisation (LID, Location IDentifier en anglais) quelconque, tel que défini dans le standard SUPL.

Cet identifiant Cld de cellule n'est pas, dans l'exemple décrit ici, directement exploitable par le terminal 10 ni par l'application « MM », ni par l'agent SUPL 1 pour en déduire la localisation du terminal 10.

Il permet en revanche au serveur 20 de localisation géographique d'obtenir une position géographique PG₁ de précision grossière du terminal 10 au cours d'une étape D12.

Comme décrit précédemment, différents moyens, selon la nature des informations sur le terminal dont dispose le serveur 20 de localisation, peuvent être utilisés pour obtenir une position géographique grossière à l'aide de ces informations sur le terminal. Dans l'exemple décrit ici, l'identifiant de cellule Cld est combiné à des caractéristiques géographiques de la cellule mémorisées dans la mémoire morte 22 du serveur 20 de localisation géographique. On obtient ainsi une zone géographique dont l'étendue est définie par la taille de la cellule identifiée par Cld. Ceci permet d'obtenir une position géographique PG₁ du terminal 10, par exemple déterminée par les coordonnées géographiques du centre de la cellule, avec une précision P₁ égale au rayon de la cellule identifiée par Cld. Comme vu précédemment, la précision d'une telle position est de l'ordre de 200m en zone urbaine alors qu'elle peut atteindre 20km en zone rurale. Au sens de l'invention cette position PG₁ est donc qualifiée de position géographique de précision grossière par rapport à la position requise et attendue par l'agent SUPL 1, qui elle représente une position de précision fine.

Dans un autre mode de réalisation, une base de données de cellules est mémorisée dans la mémoire morte 22 du serveur 20 de localisation. Cette base de données comporte, pour chaque cellule identifiée par un identifiant Cld de cellule, une position géographique PG et une précision P associée à cette position géographique PG (typiquement par exemple le rayon de la cellule). Sur réception de l'identifiant Cld de cellule, le serveur 20 de localisation consulte cette base de données de cellules et obtient ainsi la position géographique PG₁ de précision grossière.

En conséquence, l'obtention de la position géographique PG₁ de précision grossière du terminal 10 à partir de l'identifiant de cellule Cld est très rapide.

Cette position géographique PG₁ de précision grossière est fournie au destinataire, ici l'agent SUPL 1 du terminal 10, au cours d'une étape D14. Elle est envoyée par le serveur 20 de localisation à l'agent SUPL 1 dans un premier message M₁(PG₁,P₁). Ce message constitue un message préliminaire au message de notification attendu par l'agent SUPL 1 en réponse à sa requête de localisation précise du terminal 10.

Le premier message M₁(PG₁,P₁) comporte également une indication représentative de la précision P₁ de la position géographique PG₁. Ici cette indication est la précision P₁, égale par exemple à 2 km.

En variante, le premier message M₁(PG₁,P₁) comporte une localisation géographique grossière du terminal 10 présentée sous la forme d'une ellipse définie par les coordonnées de son centre PG₁, l'orientation de son axe majeur par rapport au nord géographique ainsi que les deux demi-rayons des axes de cette ellipse. Ces informations constituent une indication de la précision P₁ de la position géographique PG₁ de précision grossière du terminal, en ramenant par exemple l'ellipse à un cercle dont le rayon désigne la précision P₁.

L'agent SUPL 1 du terminal 10 envoie alors la position géographique de précision grossière PG₁ et la précision P₁ à l'application « MM ».

A titre indicatif, mais de manière non limitative, il s'est écoulé moins de 3 secondes entre l'envoi de la requête R et la réception par l'application « MM » de la position géographique grossière PG₁ du terminal 10.

Dans l'exemple décrit ici, l'application « MM » envoie alors, via les moyens de communication du terminal 10, une requête de carte au serveur cartographique 30 afin d'afficher sur l'écran 11 du terminal 10 une carte centrée sur la position géographique PG₁ qui lui a été retournée par le serveur 20 de localisation. L'application « MM » affiche sur cette carte un cercle centré sur la position géographique PG₁ de rayon égal à la précision P₁ de la position PG₁. Un message est également affiché sur l'écran 11 du terminal 10 pour indiquer à l'utilisateur qu'une position plus précise est en cours de détermination. A titre indicatif, il s'est écoulé moins de 10s entre la requête de l'utilisateur via le lancement de l'application « MM » et l'affichage de la carte sur l'écran 11 du terminal 10.

L'étape D14 d'envoi à l'agent SUPL 1 du premier message M₁(PG₁,P₁) comportant la position géographique PG₁ de précision grossière du terminal 10, est réalisée pendant une étape D16 de détermination de la position géographique de précision fine du terminal 10. Le serveur comprend à cet effet des moyens pour activer l'envoi de la position de précision grossière du terminal au destinataire pendant la détermination de la position géographique de précision fine du terminal.

En variante, l'étape D14 d'envoi à l'agent SUPL 1 du premier message M₁(PG₁,P₁) comportant la position géographique PG₁ de précision grossière du terminal 10, est réalisée avant une étape D16 de détermination de la position géographique de précision fine du terminal 10.

Cette étape D14 d'envoi du premier message comportant la position géographique de précision grossière à l'agent destinataire 1 est, en tout état de cause, réalisée avant l'étape de fourniture au destinataire de la position géographique de précision fine du terminal, afin que le destinataire bénéficie au plus vite d'une première estimation de la position géographique du terminal.

L'étape D16 de détermination de la position géographiques PG₂ de précision fine du terminal 10 comporte elle-même plusieurs étapes, décrites ci-dessous.

Au cours d'une étape D161, le serveur 20 de localisation géographique obtient des données d'assistance DA, par exemple en interrogeant un système satellite comme décrit précédemment. Ces données sont obtenues à l'aide de la position géographique PG₁ de précision grossière déterminée au cours de l'étape D12.

Au cours d'une étape D162, le serveur 20 de localisation géographique envoie ces données d'assistance DA au terminal 10. Dans l'exemple décrit ici, de façon connue de l'homme du métier, ces données d'assistance permettent au terminal 10 d'identifier les signaux satellite pertinents qu'il doit suivre et mesurer. Les mesures M ainsi obtenues sont utiles pour évaluer la position géographique de précision fine de ce terminal.

Dans un exemple non représentatif de l'invention, ces mesures M sont envoyées par le terminal 10 au serveur 20 de localisation qui les reçoit au cours d'une étape D163.

Au cours d'une étape D164, une position géographique PG₂ de précision fine du terminal 10 est évaluée par le serveur 20 de localisation. Cette position PG₂ de précision fine du terminal 10 est calculée à l'aide des mesures M reçues du terminal 10.

Cette position est obtenue par des moyens connus de l'homme du métier, tels que ceux employés habituellement dans les récepteurs GPS ou A-GPS pour déterminer la position géographique d'un équipement.

Cette position géographique PG₂ de précision fine est associée à une précision P₂ fine. Dans l'exemple décrit ici P₂=10m.

Dans l'invention, les mesures M effectuées par le terminal 10 sur les signaux satellites ne sont pas envoyées au serveur 20 de localisation mais utilisées directement par le terminal 10 pour calculer la position géographique PG₂ de précision fine. Cette position est évaluée à l'aide de moyens connus de l'homme du métier, tels que ceux employés habituellement dans un terminal GPS ou A-GPS pour déterminer sa position géographique, comme décrits précédemment. Cette position géographique PG₂ de précision fine est ensuite envoyée au serveur 20 de localisation par le terminal 10. Elle est reçue par le serveur 20 de localisation au cours d'une étape D165.

Au cours d'une étape D18, le serveur 20 de localisation fournit à l'agent SUPL 1 destinataire la position géographique PG₂ de précision fine du terminal 10 dans un second message M₂(PG₂,P₂). Ce second message M₂(PG₂,P₂) fait suite au premier message M₁(PG₁,P₁) précédemment envoyé et est envoyé par le serveur 20 de localisation en réponse à la requête R de l'agent SUPL 1.

Le second message M₂(PG₂,P₂) comporte également une indication représentative de la précision P₂ de la position géographique PG₂. Ici cette indication est la précision P₂, égale à 10 m.

Après réception du message M₂(PG₂,P₂), l'application « MM » fait une requête de carte au serveur cartographique 30, centrée sur la position géographique PG₂. L'application « MM » affiche sur l'écran 11 du terminal 10 la carte envoyée par le serveur cartographique 30, sur laquelle est représentée un cercle centré sur la position géographique PG₂ et de rayon égal à la précision P₂. L'utilisateur se rend compte que le terminal 10 est maintenant localisé plus précisément. A titre indicatif, entre la requête de l'utilisateur via le lancement de l'application « MM » et l'affichage de la carte comprenant la localisation précise PG₂, il s'est écoulé environ 45s.

Ainsi dans ce premier mode de réalisation, le procédé et le serveur 20 de localisation selon l'invention, permettent de fournir rapidement à un destinataire, en l'occurrence au terminal 10 ici, une information de localisation grossière du terminal pendant que l'information de localisation précise est obtenue.

### Second mode particulier de réalisation de l'invention

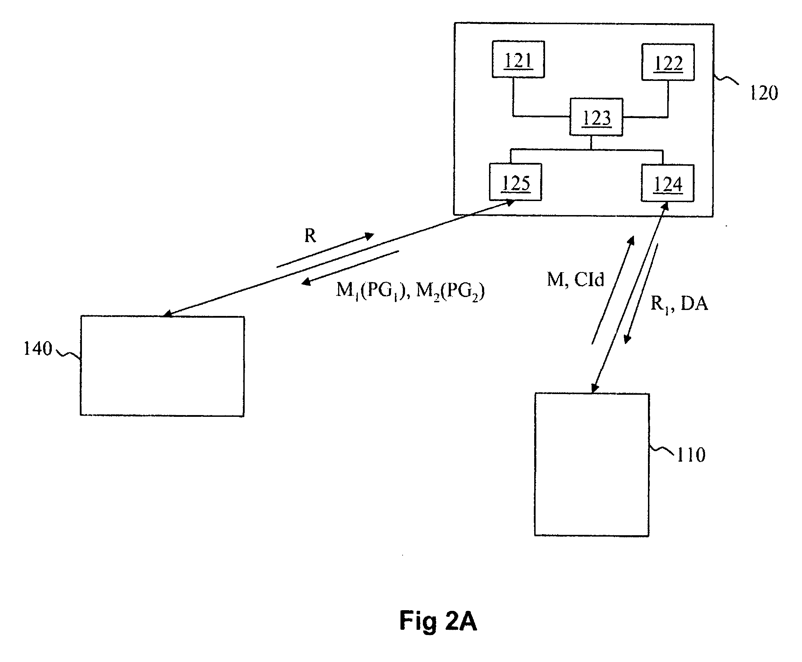

La figure 2A représente un serveur de localisation 120 selon l'invention dans un second mode particulier de réalisation.

On suppose, dans ce second mode particulier de réalisation que des parents cherchent à localiser leur enfant, lequel dispose d'un terminal mobile 110, via un service de localisation appelé « Localisation Enfant ». Cette localisation est souhaitée avec une précision d'une dizaine de mètres. Ce service est supposé accessible par le biais d'une page web permettant de se connecter à une plateforme 140 de service. Les parents s'authentifient alors auprès de la plateforme 140 de service et une fois correctement authentifiés, demandent la localisation de leur enfant. Cette localisation est déterminée grâce à l'obtention de la position géographique du terminal 110 de l'enfant.

Dans l'exemple décrit ici, le terminal 110 est un terminal mobile, connecté à un réseau d'accès cellulaire sans fil, par exemple de type GSM (Global System for Mobile communications) ou UMTS (Universal Mobile Telecommunication System) non représenté sur la figure. On suppose que le terminal 110 est un terminal équipé de la fonctionnalité A-GPS ou GPS assisté.

La plateforme 140 de service adresse une requête R de localisation du terminal 110 au serveur 120 de localisation et attend une réponse du serveur.

Dans l'exemple décrit ici, les messages échangés entre la plateforme 140 et le serveur 120 de localisation sont supposés conformes au protocole MLP normalisé par l'Open Mobile Alliance. Les premier et second messages envoyés au destinataire et comportant respectivement les positions géographiques de précision grossière et de précision fine du terminal seront considérés à l'avenir ici comme des extensions du protocole MLP. Le protocole MLP permet ainsi à la plateforme cliente 140 d'interroger le serveur 120 de localisation sur le mode requête-réponse. Comme vu précédemment, ce protocole est utilisé dans la plupart des implémentations de localisation sur réseaux mobiles cellulaires.

Dans un autre mode particulier de réalisation de l'invention, le premier message est une extension du protocole MLP tandis que le second message est conforme au protocole MLP.

Ces deux variantes de réalisation (premier et second messages constituant des extensions du protocole MLP ; premier message constituant une extension du protocole MLP et second message conforme au protocole MLP) ne sont en aucun cas limitatives, d'autres variantes pouvant être envisagées dans le cadre de l'invention.

Le serveur 120 de localisation a l'architecture matérielle d'un ordinateur. On suppose ici qu'il est équipé pour supporter la technologie A-GPS. Il comporte :
- des moyens de communication 124 avec le terminal 110 (via le réseau d'accès cellulaire) ;
- des moyens de communication 125 avec le client 140 ; et
- des moyens de communication non représentés sur la figure avec un système satellite.

Ces moyens de communication 124 et 125 ont des fonctions analogues à celles citées précédemment pour les moyens de communication 24 du serveur 20 de la figure 1A. Il en est de même pour les moyens de communication avec un système satellite qui sont identiques aux moyens de communication avec un système satellite du serveur 20 de localisation de la figure 1A.

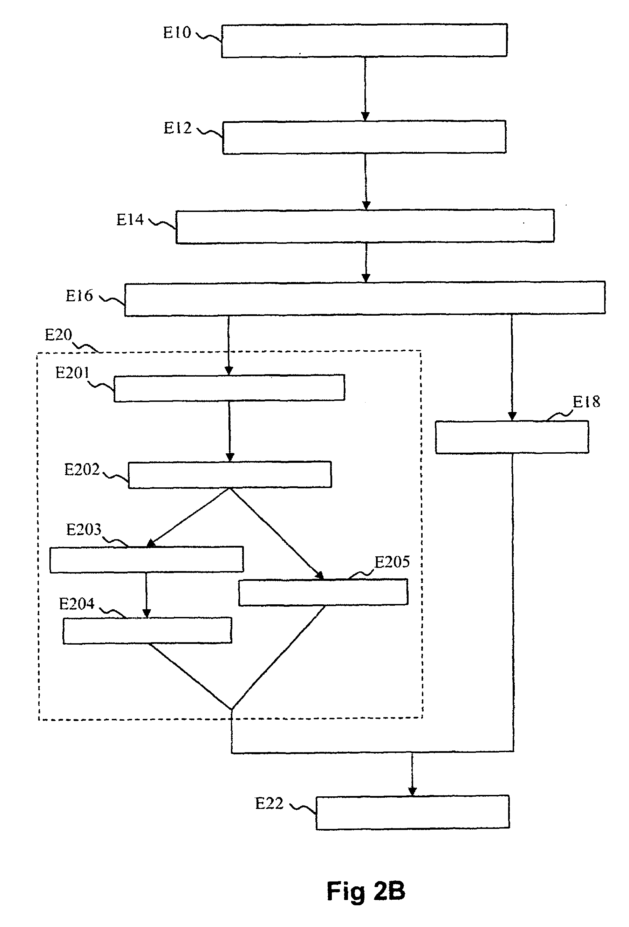

Le serveur 120 de localisation comporte également un processeur 123, une mémoire vive 121 et une mémoire morte 122. La mémoire morte 122 du serveur 120 de localisation décrit ici comporte un programme informatique selon l'invention adapté à exécuter les principales étapes du procédé de localisation géographique selon l'invention, ces principales étapes étant représentées sous forme d'organigramme sur la figure 2B, décrite maintenant.

Comme décrit ci-dessus, la plateforme 140 de service adresse une requête R au serveur 120 de localisation pour obtenir la position géographique du terminal 110. Dans l'exemple décrit ici, c'est la plateforme 140 qui est le destinataire des messages comportant la position géographique du terminal. Cette requête est reçue au cours d'une étape E10 par le serveur 120 de localisation.

Dans l'exemple décrit ici, le serveur 120 de localisation envoie alors au cours d'une étape E12 une requête R₁ d'initiation d'une session A-GPS avec le terminal 110. Cette requête a pour but de « réveiller » le terminal 110 et de l'informer qu'un échange de données avec le serveur 120 de localisation géographique va commencer afin de déterminer une position géographique PG₂ de précision fine. Le terminal 110 répond à cette requête en envoyant au serveur 120 de localisation une information permettant au serveur 120 de localisation d'obtenir une position géographique de précision grossière du terminal.

Dans l'exemple décrit ici, cette information provenant du terminal est l'identifiant Cld de la cellule à laquelle il est attaché dans le réseau cellulaire. Comme décrit précédemment, en variante, cette information peut être de toute autre nature, par exemple une adresse IP, un identifiant de point d'accès, des mesures de signaux effectués à partir de signaux reçus des cellules à proximité du terminal 110,...

Au cours d'une étape E14, le serveur 120 de localisation reçoit du terminal 110 l'identifiant Cld de la cellule à laquelle il est attaché.

L'identifiant Cld est utilisé au cours d'une étape E16 par le serveur 120 de localisation pour déterminer une position géographique PG₁ de précision grossière du terminal 110, à l'aide des moyens décrits précédemment dans le premier mode de réalisation de l'invention. Dans l'exemple décrit ici, on suppose que la méthode choisie pour déterminer une position géographique de précision grossière du terminal 110 est la méthode par identification de cellule.

Comme vu précédemment, cette position géographique PG₁ de précision grossière est déterminée avec une précision P₁ de l'ordre ici de 200m en zone urbaine et de 20km en zone rurale.

Le serveur 120 de localisation envoie au cours d'une étape E18 la position géographique PG₁ de précision grossière ainsi obtenue à la plateforme 140 destinataire dans un premier message M₁(PG₁). Ce premier message M₁(PG₁) comporte une indication selon laquelle il ne s'agit que d'une première réponse préliminaire et qu'une seconde réponse comportant une position géographique de précision fine du terminal sera envoyée ultérieurement.

Dans l'exemple décrit ici, cette indication est incluse dans un champ du message envoyé par le serveur 120 de localisation à la plateforme 140 de service : ce champ prend une valeur V₁ lorsque la position géographique correspond à la première réponse grossière et une valeur V₂, différente de V₁, lorsque la position géographique correspond à la seconde réponse fine.

La plateforme 140 de service peut alors afficher sur l'ordinateur des parents une carte indiquant grossièrement la localisation de leur enfant (typiquement à l'échelle d'un quartier d'une ville). Cette carte est centrée sur la position géographique PG₁ de précision grossière obtenue pour le terminal 110. A titre indicatif, cette carte est affichée au bout d'une dizaine de secondes sur l'écran de l'ordinateur des parents.

L'étape E18 d'envoi du premier message M₁(PG₁) est réalisée pendant une étape E20 de détermination de la position géographique PG₂ de précision fine du terminal 110. Comme décrit précédemment pour le premier mode particulier de réalisation de l'invention, l'étape E18 d'envoi du premier message comportant la position géographique de précision grossière à la plateforme destinataire 140 est réalisée avant l'étape E22 de fourniture au destinataire de la position géographique de précision fine du terminal 110, afin que le destinataire bénéficie au plus vite d'une première estimation de la position géographique du terminal.

Au cours de cette étape E20, comme vu précédemment dans le premier mode de réalisation de l'invention, la position géographique PG₁ de précision grossière est utilisée pour déterminer la position géographique PG₂ de précision fine. Elle permet notamment au serveur 120 de localisation d'obtenir par exemple d'un système satellite au cours d'une étape E201 des données d'assistance DA pouvant être utiles au terminal 110. Ces données d'assistance DA sont envoyées par le serveur 120 via les moyens de communication 124 au terminal 110 au cours d'une étape E202.

On suppose dans ce mode particulier de réalisation que le terminal 110 évalue lui-même sa position géographique à l'aide de la fonctionnalité A-GPS avec une précision d'une dizaine de mètres. Les moyens qu'il met en oeuvre pour évaluer cette position géographique PG₂ sont connus de l'homme du métier et sont les moyens habituellement mis en oeuvre par un système A-GPS pour calculer une position géographique. Ils utilisent notamment les résultats de mesures M effectuées par le terminal 110 sur des signaux satellites à l'aide des informations comprises dans les données d'assistance DA.

Le terminal 110 renvoie alors cette position géographique PG₂ de précision fine au serveur 120 de localisation, qui la reçoit au cours d'une étape E205.

Comme décrit précédemment, dans un autre mode de réalisation particulier de l'invention, cette position géographique PG₂ de précision fine est évaluée par le serveur 120 de localisation au cours d'une étape E204 à l'aide de mesures M reçues du terminal 110 au cours d'une étape E203.

Le serveur 120 de localisation envoie ensuite (étape E22) un second message M₂(PG₂) à la plateforme destinataire 140, en réponse à sa requête R. Ce message comporte la position géographique fine PG₂ du terminal 110.

Une animation graphique, par exemple de type zoom sur la carte préalablement affichée, est alors réalisée par la plateforme 140 permettant aux parents de visualiser sur leur ordinateur la position géographique précisée de leur enfant. Cette nouvelle position est affichée au bout d'environ 45 à 60 secondes sur l'ordinateur des parents.

## Revendications

1. Procédé de localisation géographique d'un terminal (10,110) connecté à un réseau de télécommunications, comportant :
- une étape (D10,E10) de réception d'une requête (R) visant à l'obtention par un destinataire (1,140) d'une position géographique (PG₂) de précision fine dudit terminal (10,110) ;
- une étape (D12,E16) d'obtention d'une position géographique (PG₁) de précision grossière dudit terminal (10,110) à partir d'informations (CId) sur ledit terminal (10,110) ;
- une étape (D16,E20) de détermination de ladite position géographique (PG₂) de précision fine à l'aide de ladite position géographique (PG₁) de précision grossière ;
- une étape (D18,E22) de fourniture de ladite position géographique (PG₂) de précision fine audit destinataire (1,140) en réponse à ladite requête (R) ; et
- une étape (D14,E18) préliminaire à ladite étape (D18,E22) de fourniture, d'envoi audit destinataire (1,140) d'un premier message (M₁), ce premier message (M₁) comportant ladite position géographique (PG₁) de précision grossière ;
ledit procédé étant **caractérisé en ce que** ladite étape (D16,E20) de détermination comporte :
- une étape (D161,E201) d'obtention de données d'assistance (DA) à l'aide de ladite position géographique (PG₁) de précision grossière ;
- une étape (D162,E202) d'envoi desdites données d'assistance (DA) audit terminal (10,110), pour l'obtention de mesures (M) utiles à l'évaluation de ladite position géographique (PG₂) de précision fine ; et
- une étape (D165,E205) de réception d'un message dudit terminal (10,110) comportant ladite position géographique (PG₂) de précision fine.

2. Procédé selon la revendication 1 **caractérisé en ce que** l'envoi de la position de précision grossière du terminal au destinataire est réalisée pendant l'étape de détermination de la position géographique de précision fine du terminal.

3. Procédé de localisation géographique d'un terminal (10,110) selon la revendication 1, **caractérisé en ce que**, au cours de ladite étape de fourniture (D18,E22), ladite position géographique de précision fine est fournie dans un second message (M₂) envoyé audit destinataire.

4. Procédé de localisation géographique d'un terminal (10,110) selon l'une quelconque des revendications 1 à 3, **caractérisé en ce qu'**au moins un desdits premier et second messages (M₁,M₂) comporte une indication (P₁,P₂) représentative de la précision de ladite position géographique comprise dans ce message (M₁,M₂).

5. Procédé de localisation géographique d'un terminal (10,110) selon l'une quelconque des revendications 1 à 4, **caractérisé en ce que** ledit premier message (M₁) comporte une indication selon laquelle ladite position géographique (PG₂) de précision fine sera fournie ultérieurement.

6. Procédé de localisation géographique d'un terminal (10,110) selon l'une quelconque des revendications 1 à 5, **caractérisé en ce que**, lorsque ledit réseau de télécommunications est un réseau cellulaire, lesdites informations sur ledit terminal (10,110) comportent un identifiant (CId) de la cellule à laquelle ledit terminal (10,110) est attaché.

7. Programme d'ordinateur comportant des instructions pour l'exécution des étapes du procédé de localisation géographique d'un terminal (10,110) selon l'une quelconques des revendications 1 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé de localisation géographique d'un terminal (10,110) selon l'une quelconques des revendications 1 à 6.

9. Serveur (20,120) de localisation géographique d'un terminal (10,110) connecté à un réseau de télécommunications, comprenant :
- des moyens (24,125) pour recevoir une requête (R) visant à l'obtention par un destinataire (1,140) d'une position géographique (PG₂) de précision fine dudit terminal (10,110) ;
- des moyens (23,123) pour obtenir une position géographique (PG₁) de précision grossière dudit terminal (10,110) à partir d'informations (CId) sur ledit terminal (10,110) ;
- des moyens pour déterminer ladite position géographique (PG₂) de précision fine dudit terminal (10,110) à l'aide de ladite position géographique (PG₁) de précision grossière ;
- des moyens (24,125) pour fournir ladite position géographique (PG₂) de précision fine audit destinataire (1,140) en réponse à ladite requête (R) ; et
- des moyens (24,125) pour envoyer audit destinataire (1,140), préliminairement à la fourniture de ladite position géographique (PG₂) de précision fine, un premier message (M₁), ce premier message (M₁) comportant ladite position géographique (PG₁) de précision grossière dudit terminal (10,110) ;
ledit serveur (20,120) étant **caractérisé en ce que** lesdits moyens pour déterminer ladite position géographique (PG₂) de précision fine dudit terminal (10,110) comprennent :
- des moyens pour obtenir des données d'assistance (DA) à l'aide de ladite position géographique (PG₁) de précision grossière ;
- des moyens pour envoyer lesdites données d'assistance (DA) audit terminal (10,110), pour l'obtention de mesures (M) utiles à l'évaluation de ladite position géographique (PG₂) de précision fine ; et
- des moyens pour recevoir un message dudit terminal (10,110) comportant ladite position géographique (PG₂) de précision fine.

10. Serveur selon la revendication 9, **caractérisé en ce qu'**il comprend des moyens pour activer l'envoi de la position de précision grossière du terminal au destinataire pendant la détermination de la position géographique de précision fine du terminal.

## Claims

1. Method for the geographical location of a terminal (10,110) connected to a telecommunications network, comprising:
- a step (D10,E10) of receiving a request (R) aimed at the obtaining by a recipient (1,140) of a fine precision geographical position (PG₂) of said terminal (10,110);
- a step (D12,E16) of obtaining a coarse precision geographical position (PG₁) of said terminal (10,110) on the basis of information (CId) about said terminal (10,110);
- a step (D16,E20) of determining said fine precision geographical position (PG₂) with the aid of said coarse precision geographical position (PG₁) ;
- a step (D18,E22) of providing said fine precision geographical position (PG₂) to said recipient (1,140) in response to said request (R); and
- a step (D14,E18) preliminary to said step (D18,E22) of providing, of dispatching to said recipient (1,140) a first message (M₁), this first message (M₁) comprising said coarse precision geographical position (PG₁);
said method being **characterized in that** said step (D16,E20) of determining comprises:
- a step (D161,E201) of obtaining assistance data (DA) with the aid of said coarse precision geographical position (PG₁) ;
- a step (D162,E202) of dispatching said assistance data (DA) to said terminal (10,110), for the obtaining of measurements (M) useful to the evaluation of said fine precision geographical position (PG₂); and
- a step (D165,E205) of receiving a message from said terminal (10,110) comprising said fine precision geographical position (PG₂).

2. Method according to Claim 1, **characterized in that** the dispatching of the coarse precision position of the terminal to the recipient is carried out during the step of determining the fine precision geographical position of the terminal.

3. Method for the geographical location of a terminal (10,110) according to Claim 1, **characterized in that**, in the course of said providing step (D18,E22), said fine precision geographical position is provided in a second message (M₂) dispatched to said recipient.

4. Method for the geographical location of a terminal (10,110) according to any one of Claims 1 to 3, **characterized in that** at least one of said first and second messages (M₁,M₂) comprises an indication (P₁,P₂) representative of the precision of said geographical position included in this message (M₁,M₂).

5. Method for the geographical location of a terminal (10,110) according to any one of Claims 1 to 4, **characterized in that** said first message (M₁) comprises an indication according to which said fine precision geographical position (PG₂) will subsequently be provided.

6. Method for the geographical location of a terminal (10,110) according to any one of Claims 1 to 5, **characterized in that**, when said telecommunications network is a cellular network, said information about said terminal (10,110) comprises an identifier (CId) of the cell to which said terminal (10,110) is attached.

7. Computer program comprising instructions for the execution of the steps of the method for the geographical location of a terminal (10,110) according to any one of Claims 1 to 6 when said program is executed by a computer.

8. Recording medium readable by a computer on which is recorded a computer program comprising instructions for the execution of the steps of the method for the geographical location of a terminal (10,110) according to any one of Claims 1 to 6.

9. Server (20,120) for the geographical location of a terminal (10,110) connected to a telecommunications network, comprising:
- means (24,125) for receiving a request (R) aimed at the obtaining by a recipient (1,140) of a fine precision geographical position (PG₂) of said terminal (10,110);
- means (23,123) for obtaining a coarse precision geographical position (PG₁) of said terminal (10,110) on the basis of information (CId) about said terminal (10,110);
- means for determining said fine precision geographical position (PG₂) of said terminal (10,110) with the aid of said coarse precision geographical position (PG₁) ;
- means (24,125) for providing said fine precision geographical position (PG₂) to said recipient (1,140) in response to said request (R); and
- means (24,125) for dispatching to said recipient (1,140), preliminarily to the providing of said fine precision geographical position (PG₂), a first message (MM), this first message (M₁) comprising said coarse precision geographical position (PG₁) of said terminal (10,110);
said server (20,120) being **characterized in that** said means for determining said fine precision geographical position (PG₂) of said terminal (10,110) comprise:
- means for obtaining assistance data (DA) with the aid of said coarse precision geographical position (PG₁);
- means for dispatching said assistance data (DA) to said terminal (10,110), for the obtaining of measurements (M) useful to the evaluation of said fine precision geographical position (PG₂); and
- means for receiving a message from said terminal (10,110) comprising said fine precision geographical position (PG₂).

10. Server according to Claim 9, **characterized in that** it comprises means for activating the dispatching of the coarse precision position of the terminal to the recipient during the determination of the fine precision geographical position of the terminal.

## Patentansprüche

1. Verfahren zur geographischen Lokalisierung eines mit einem Telekommunikationsnetz verbundenen Endgeräts (10, 110), das aufweist:
- einen Schritt (D10, E10) des Empfangs einer Anforderung (R), die auf den Erhalt einer fein präzisierten geographischen Position (PG₂) des Endgeräts (10, 110) durch einen Empfänger (1, 140) abzielt;
- einen Schritt (D12, E16) des Erhalts einer grob präzisierten geographischen Position (PG₁) des Endgeräts (10, 110) ausgehend von Informationen (CId) über das Endgerät (10, 110);
- einen Schritt (D16, E20) der Bestimmung der fein präzisierten geographischen Position (PG₂) mit Hilfe der grob präzisierten geographischen Position (PG₁) ;
- einen Schritt (D18, E22) der Lieferung der fein präzisierten geographischen Position (PG₂) an den Empfänger (1, 140) als Antwort auf die Anforderung (R); und
- einen dem Schritt (D18, E22) der Lieferung vorhergehenden Schritt (D14, E18) des Sendens einer ersten Mitteilung (M₁) an den Empfänger (1, 140), wobei diese erste Mitteilung (M₁) die grob präzisierte geographische Position (PG₁) enthält;
wobei das Verfahren **dadurch gekennzeichnet ist, dass** der Schritt (D16, E20) der Bestimmung aufweist:
- einen Schritt (D161, E201) des Erhalts von Hilfsdaten (DA) mit Hilfe der grob präzisierten geographischen Position (PG₁);
- einen Schritt (D162, E202) des Sendens der Hilfsdaten (DA) an das Endgerät (10, 110) für den Erhalt von Messwerten (M), die für die Bewertung der fein präzisierten geographischen Position (PG₂) nützlich sind; und
- einen Schritt (D165, E205) des Empfangs einer Mitteilung vom Endgerät (10, 110), die die fein präzisierte geographische Position (PG₂) aufweist.

2. Verfahren nach Anspruch 1, **dadurch gekennzeichnet, dass** das Senden der grob präzisierten Position des Endgeräts an den Empfänger während des Schritts der Bestimmung der fein präzisierten geographischen Position des Endgeräts durchgeführt wird.

3. Verfahren zur geographischen Lokalisierung eines Endgeräts (10, 110) nach Anspruch 1, **dadurch gekennzeichnet, dass** während des Schritts der Lieferung (D18, E22) die fein präzisierte geographische Position in einer zweiten an den Empfänger gesendeten Mitteilung (M₂) geliefert wird.

4. Verfahren zur geographischen Lokalisierung eines Endgeräts (10, 110) nach einem der Ansprüche 1 bis 3, **dadurch gekennzeichnet, dass** mindestens eine der ersten und zweiten Mitteilungen (M₁, M₂) eine Angabe (P₁, P₂) aufweist, die für die Präzision der geographischen Position repräsentativ ist, die in dieser Mitteilung (M₁, M₂) enthalten ist.

5. Verfahren zur geographischen Lokalisierung eines Endgeräts (10, 110) nach einem der Ansprüche 1 bis 4, **dadurch gekennzeichnet, dass** die erste Mitteilung (M₁) eine Angabe aufweist, gemäß der die fein präzisierte geographische Position (PG₂) später geliefert wird.

6. Verfahren zur geographischen Lokalisierung eines Endgeräts (10, 110) nach einem der Ansprüche 1 bis 5, **dadurch gekennzeichnet, dass**, wenn das Telekommunikationsnetz ein zellulares Netz ist, die Informationen über das Endgerät (10, 110) eine Kennung (CId) der Zelle aufweisen, mit der das Endgerät (10, 110) verbunden ist.

7. Computerprogramm, das Anweisungen zur Ausführung der Schritte des Verfahrens zur geographischen Lokalisierung eines Endgeräts (10, 110) nach einem der Ansprüche 1 bis 6 aufweist, wenn das Programm von einem Computer ausgeführt wird.

8. Computerlesbarer Aufzeichnungsträger, auf dem ein Computerprogramm aufgezeichnet ist, das Anweisungen für die Ausführung der Schritte des Verfahrens zur geographischen Lokalisierung eines Endgeräts (10, 110) nach einem der Ansprüche 1 bis 6 aufweist.

9. Server (20, 120) zur geographischen Lokalisierung eines mit einem Telekommunikationsnetz verbundenen Endgeräts (10, 110), der enthält:
- Einrichtungen (24, 125) zum Empfang einer Anforderung (R), die auf den Erhalt einer fein präzisierten geographischen Position (PG₂) des Endgeräts (10, 110) durch einen Empfänger (1, 140) abzielt;
- Einrichtungen (23, 123) zum Erhalt einer grob präzisierten geographischen Position (PG₁) des Endgeräts (10, 110) ausgehend von Informationen (CId) über das Endgerät (10, 110);
- Einrichtungen, um die fein präzisierte geographische Position (PG₂) des Endgeräts (10, 110) mit Hilfe der grob präzisierten geographischen Position (PG₁) zu bestimmen;
- Einrichtungen (24, 125) zum Liefern der fein präzisierten geographischen Position (PG₂) an den Empfänger (1, 140) als Antwort auf die Anforderung (R); und
- Einrichtungen (24, 125) zum Senden einer ersten Mitteilung (M₁) an den Empfänger (1, 140) vor dem Liefern der fein präzisierten geographische Position (PG₂), wobei diese erste Mitteilung (M₁) die grob präzisierte geographische Position (PG₁) des Endgeräts (10, 110) aufweist;
wobei der Server (20, 120) **dadurch gekennzeichnet ist, dass** die Einrichtungen zur Bestimmung der fein präzisierten geographische Position (PG₂) des Endgeräts (10, 110) enthalten:
- Einrichtungen zum Erhalt von Hilfsdaten (DA) mit Hilfe der grob präzisierten geographischen Position (PG₁) ;
- Einrichtungen zum Senden der Hilfsdaten (DA) an das Endgerät (10, 110) zum Erhalt von Messwerten (M), die für die Bewertung der fein präzisierten geographischen Position (PG₂) nützlich sind; und
- Einrichtungen zum Empfang einer Mitteilung vom Endgerät (10, 110), die die fein präzisierte geographische Position (PG₂) enthält.

10. Server nach Anspruch 9, **dadurch gekennzeichnet, dass** er Einrichtungen enthält, um das Senden der grob präzisierten Position des Endgeräts an den Empfänger während der Bestimmung der fein präzisierten geographischen Position des Endgeräts zu aktivieren.
